# DEMANDE DE BREVET EUROPEEN

(11) **EP 3 043 458 A1**
(43) Date de publication de la demande: **13.07.2016**
(21) Numéro de dépôt: 15203243.9
(22) Date de dépôt: 31.12.2015
(51) Int. Cl.: H02K 21/02, H02K 21/16, H02K 11/04, H02K 1/02, H02K 1/14, H02K 1/27, H02K 7/14, H02K 11/00, H02K 15/03, H02K 11/33

(54) **MOTEUR ELECTRIQUE TUBULAIRE**

(30) Priorité: 31.12.2014 FR 1463499
(71) Demandeur: Société Électromécanique du Nivernais, 58000 Nevers (FR)
(72) Inventeur: FLOCCO, Bruno, 60300 Senlis (FR); VIDAL, Philippe, 03340 NEUILLY LE REAL (FR)
(74) Mandataire: GLN SA

(57) **Abrégé**

La présente invention concerne un moteur électrique tubulaire à aimants permanents (2) comportant au moins un rotor (1) constitué d'au moins un aimant permanent (2) s'étendant à travers un stator (3) portant une pluralité de bobines (4), ledit stator (3) étant constitué d'une pluralité de couronnes (13) assemblées, chaque couronne (13) comportant un évidement central pour le passage du rotor (3) et une pluralité de dents radiales en forme de T inversé s'étendant vers le centre de ladite couronne (13), lesdites dents radiales recevant respectivement les bobines (4); ledit moteur est remarquable en ce que le rapport entre la surface des dents et la surface des espaces entre lesdites dents est compris entre 0.3 et 0.7.

## Description

### DOMAINE TECHNIQUE

La présente invention concerne un moteur tubulaire à aimant permanent particulièrement destiné à être placé à l'intérieur d'un actionneur tubulaire pour des applications domotiques permettant notamment de dérouler et/ou enrouler des volets roulants, des toiles, des stores, des écrans ou similaires.

### ART ANTERIEUR

Dans le domaine des actionneurs électromécaniques permettant le pilotage motorisé des éléments d'occultation ou de protection solaire dans un bâtiment, tels que des volets roulants ou des stores, il est bien connu d'utiliser des moteurs électriques synchrones à commutation électronique de faible puissance dont les dimensions radiales sont réduites pour être intégré à un actionneur tubulaire.

De tels moteurs doivent présenter un couple important sous un faible encombrement radial de manière à pouvoir être intégré dans un tube d'enroulement de volet ou de store par exemple. Ces dimensions particulières incitent à réaliser des moteurs longs, la longueur du moteur compensant sa faible section pour obtenir la puissance nécessaire à l'entraînement du volet ou du store.

La plupart des moteurs utilisés pour ce type d'application consiste dans des moteurs à courant continu à balais, comprenant un rotor bobiné et un stator à aimants permanents en ferrite. Le rotor est relié à un collecteur tournant. Le courant est injecté via les balais au collecteur. Toutefois, ces moteurs sont désormais remplacés par des moteurs dits brushless fonctionnamt sans balais. Ces moteurs brushless comprennent un stator bobiné tandis que les aimants sont placés sur le rotor, un système électronique de commande assurant la commutation du courant dans les enroulements statoriques.

De tels moteurs sont notamment décrits dans les demandes de brevet européen EP 2 224 581 et EP 0 410 933 et dans la demande de brevet international WO 2012/123575.

Le document EP 2 224 581 décrit un moteur électrique tubulaire comprenant un corps de stator, équipé d'un noyau ferromagnétique et des enroulements respectifs, et un conducteur constitué par une tige insérée de manière coulissante et coaxiale dans le corps de stator. La tige comprend un ensemble d'aimants permanents répartis uniformément le long de l'axe longitudinal de ladite tige et alternant avec des éléments d'entretoise de raccordement en matériau ferromagnétique. Ledit noyau ferromagnétique a une structure modulaire comprenant une pluralité de modules ferromagnétiques adjacents réalisés par pressage de composites magnétique doux.

Le document EP 0 410 933 décrit un moto-réducteur tubulaire à double isolation comprenant un moteur constitué d'un stator solidaire d'un tube métallique entourant au moins le moteur et d'un rotor cinématiquement relié au mobile d'entrée d'un réducteur, dans lequel le stator est entouré d'une enveloppe isolante. Ledit stator est muni, à chacune de ses extrémités, d'une pièce d'extrémité dont la partie jouxtant le stator présente, au moins sur sa plus grande partie, un diamètre inférieur au diamètre du stator et autour de laquelle les extrémités de l'enveloppe isolante débordant le stator sont resserrées.

Par ailleurs, le document WO2012/123575 décrit un moteur électrique comprenant un rotor et un stator bobiné, le rotor comprenant un arbre et deux disques montés fixes en rotation sur l'arbre et équipés d'aimants permanents, une portion, dite externe, du stator s'étendant au niveau de chaque disque axialement parallèlement à un axe de rotation du rotor et radialement au-delà de celui-ci en partant de l'axe. Ce stator comprend une pluralité de barres disjointes qui sont réalisées dans un matériau magnétiquement conducteur et dont certaines parties formant la portion externe du stator. Le stator comprend également une structure porteuse maintenant les barres fixes les unes par rapport aux autres, la structure porteuse étant montée avec possibilité de rotation sur l'arbre, axialement à l'extérieur des deux disques. La portion externe du stator s'étend parallèlement à l'axe de rotation, axialement à l'extérieur des disques du rotor, jusqu'au niveau de la structure porteuse.

Tous ces moteurs électriques présentent l'inconvénient d'être soit trop encombrants soit de procurer un couple insuffisant pour des applications de volets roulants ou de stores. En outre, ces moteurs ont tendance à émettre un bruit susceptible de nuire au confort des utilisateurs.

### EXPOSE DE L'INVENTION

L'un des buts de l'invention est donc de remédier à ces inconvénients en proposant.

A cet effet et conformément à l'invention, il est proposé un moteur électrique tubulaire à aimants permanents comportant au moins un rotor constitué d'au moins un aimant permanent s'étendant à travers un stator portant une pluralité de bobines, ledit stator étant constitué d'une pluralité de couronnes assemblées, chaque couronne comportant un évidement central pour le passage du rotor et une pluralité de dents radiales en forme de T inversé s'étendant vers le centre de ladite couronne, lesdites dents radiales recevant respectivement les bobine ; ledit moteur est remarquable en ce que le rapport entre la surface des dents et la surface des espaces entre lesdites dents est compris entre 0.3 et 0.7.

On notera que ce rapport particulier entre la surface des dents et la surface des espaces entre lesdites dents procure un couple particulièrement important permettant de réduire significativement le diamètre, mais surtout la longueur du moteur.

De préférence, le rapport entre la surface des dents et la surface des espaces entre lesdites dents est compris entre 0.45 et 0.55, et, préférentiellement, est égal à 0.5.

Par ailleurs, le rotor est constitué d'un cylindre en plastoferrite aimanté, emmanché et collé sur un arbre.

Ledit cylindre en plastoferrite présente une épaisseur comprise entre 0,1 et 0,2 fois la longueur dudit cylindre.

De plus, la paroi intérieure du cylindre en plastoferrite est collée sur la paroi extérieure d'un corps de base cylindrique, coaxial et solidaire de l'arbre du moteur.

De manière avantageuse, le cylindre en plastoferrite est collé sur l'arbre ou le corps de base cylindrique au moyen d'une colle cyanoacrylate.

Par ailleurs, le corps de base cylindrique présente des évidements longitudinaux uniformément répartis autour de son axe de rotation.

De plus, la paroi externe du cylindre en plastoferrite comporte une ou plusieurs rainures annulaires.

Accessoirement, la paroi externe du cylindre en plastoferrite comporte au moins un creux.

### DESCRIPTION SOMMAIRE DES FIGURES

D'autres avantages et caractéristiques ressortiront mieux de la description qui va suivre de plusieurs variantes d'exécution, données à titre d'exemple non limitatifs, du moteur électrique tubulaire à aimants permanents conforme à l'invention, en référence aux dessins annexés sur lesquels :
- la figure 1 est une vue en perspective du moteur électrique suivant l'invention,
- la figure 2 est une vue en perspective partiellement éclatée du moteur électrique à aimants permanents suivant l'invention,
- la figure 3 est une vue en perspective éclatée du moteur électrique à aimants permanents suivant l'invention,
- la figure 4 est une vue en coupe longitudinale du moteur électrique à aimants permanents suivant l'invention,
- la figure 5 est une vue en coupe transversale schématique du moteur électrique à aimants permanents suivant l'invention,
- la figure 6 est une vue de face d'une couronne formant le stator du moteur électrique conforme à l'invention
- la figure 7 est une représentation schématique de la carte électronique de commande du moteur électrique à aimants permanents suivant l'invention,

### DESCRIPTION DETAILLEE DE L'INVENTION

Dans la suite de la description du moteur électrique à aimants permanents suivant l'invention, les mêmes références numériques désignent les mêmes éléments. Les différentes vues ne sont pas nécessairement tracées à l'échelle. Par ailleurs, le moteur électrique à aimants permanents est particulièrement destiné aux actionneurs tubulaires pour volets roulants ou stores notamment ; toutefois, il est bien évident que le moteur électrique à aimants permanents suivant l'invention pourra trouver de nombreuses applications notamment dans le domaine des automatismes sans pour autant sortir du cadre de l'invention.

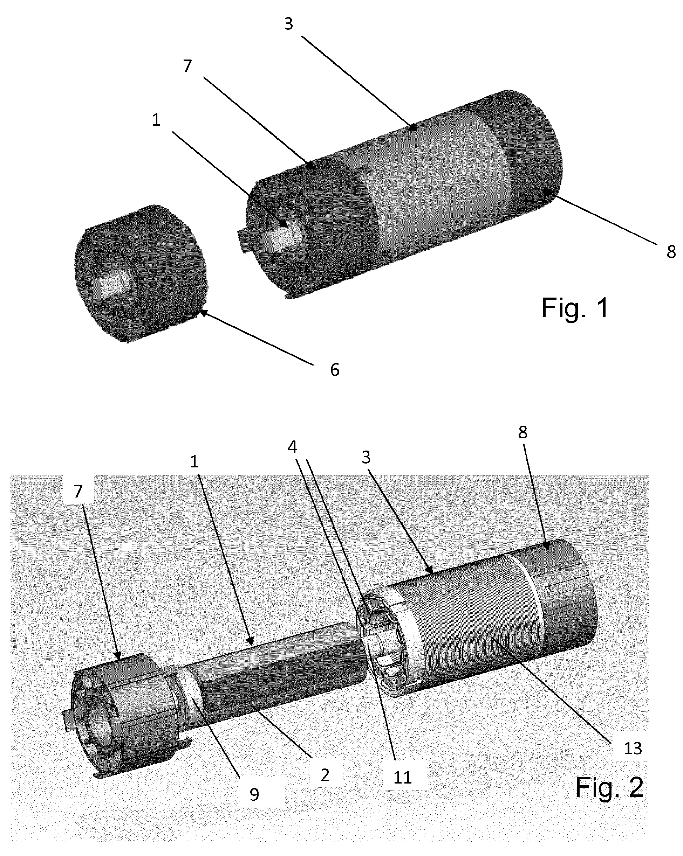

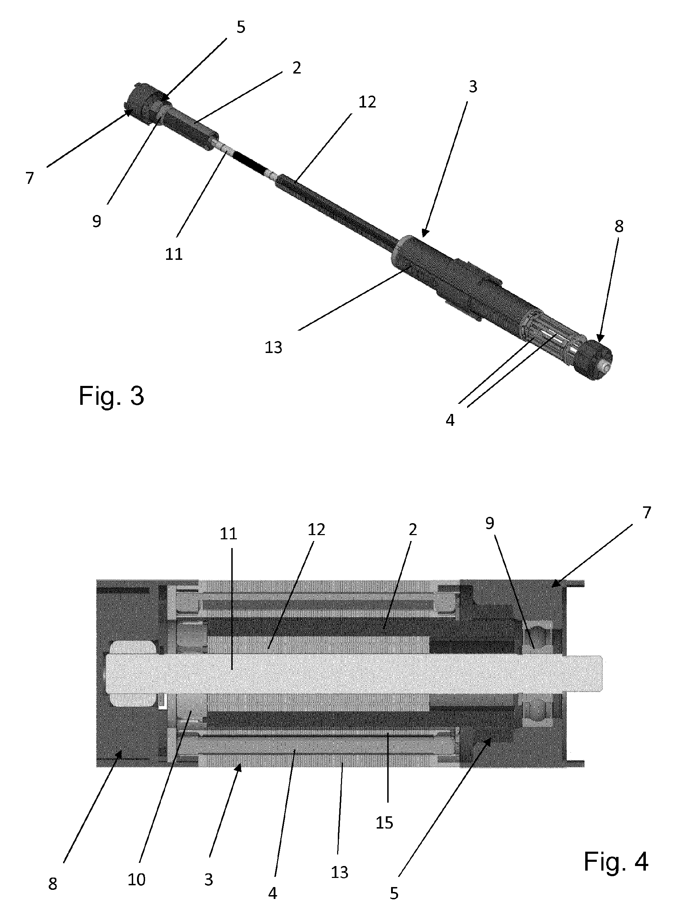

En référence aux figures 1 à 4, le moteur électrique à aimants permanents suivant l'invention est constitué d'un rotor 1 comprenant un aimant permanent en plastoferrite 2 s'étendant à travers un stator 3 portant une pluralité de bobines 4 et un frein 5, l'ensemble s'étendant entre un flasque avant 7 et un flasque arrière 8 portant des paliers 9 et 10 sur lesquels prend appui le rotor 1, et un réducteur 6. Ledit réducteur 6 consiste dans un réducteur épicycloïdal ; toutefois, il est bien évident que le réducteur pourra consister dans tout réducteur bien connu de l'homme du métier sans pour autant sortir du cadre de l'invention. Par ailleurs, ledit frein 5 pourra consister dans tout frein bien connu de l'homme du métier et piloté par une carte électronique non représentée sur les figures.

Le rotor 1 est constitué d'un cylindre en plastoferrite aimanté 2, emmanché et collé sur un arbre 11, ledit cylindre en plastoferrite 2 s'étendant entre les deux paliers 9 et 10 solidaires dudit arbre 11. On entend par « plastoferrite » un matériau composé de poudre de ferrite mélangée à un liant thermoplastique. Il est bien évident que le cylindre en plastoferrite 2 suivant l'invention pourra être obtenu par tout procédé de moulage et/ou d'usinage d'un matériau plastoferrite bien connu de l'homme du métier.

De préférence, le cylindre en plastoferrite 2 présente une épaisseur comprise entre 0,1 et 0,2 fois la longueur dudit cylindre 2. Par ailleurs, la paroi intérieure du cylindre en plastoferrite 2 est collée sur la paroi extérieure d'un corps de base 12 cylindrique, coaxial et solidaire de l'arbre 11 du moteur. Ledit cylindre en plastoferrite 2 est collé sur le corps de base 12 cylindrique au moyen d'une colle cyanoacrylate bien connu de l'homme du métier.

Il est bien évident que la colle cyanoacrylate pourra être substituée par toute autre colle adaptée bien connue de l'homme du métier telle qu'une colle époxy par exemple sans pour autant sortir du cadre de l'invention.

Par ailleurs, le cylindre en plastoferrite 2 pourra être substitué par un cylindre en Neoplat ou Feplast par exemple sans pour autant sortir du cadre de l'invention.

Accessoirement, le corps de base 12 cylindrique pourra présenter des évidements longitudinaux, non représentés sur les figures, uniformément répartis autour de son axe de rotation.

Avantageusement, la paroi externe du cylindre en plastoferrite 2 comporte une ou plusieurs rainures annulaires et/ou au moins un creux, non représentés sur les figures, afin d'assurer un parfait équilibrage du cylindre en plastoferrite 2 et éviter tout effort sur les paliers lors de la rotation dudit cylindre en plastoferrite 2 lors du fonctionnement du moteur.

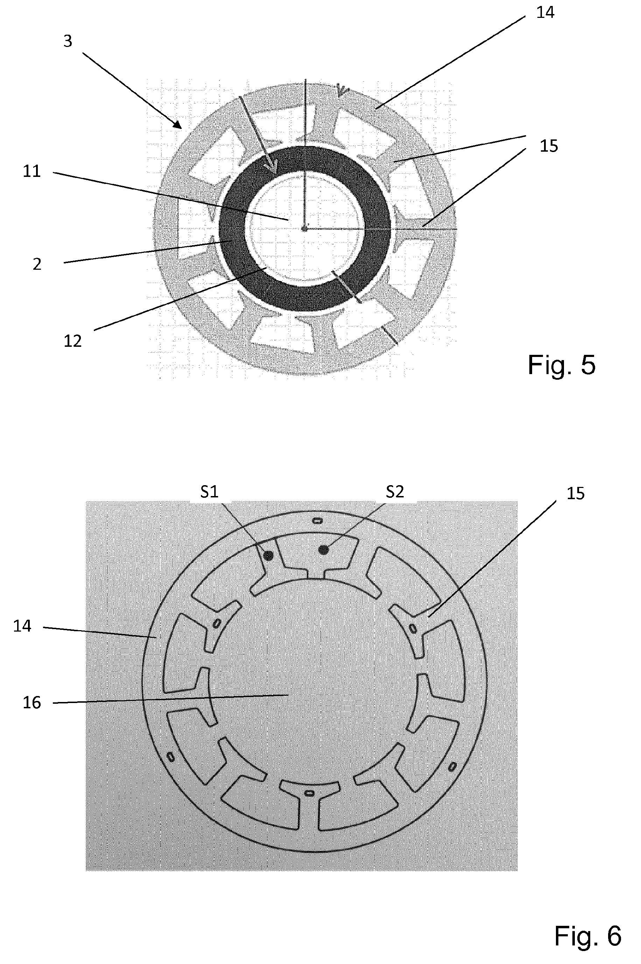

En référence aux figures 2 à 6, le stator 3 est constitué d'une pluralité de couronnes 13 coaxiales, assemblées les unes aux autres par boutonnage par exemple, ou par tout autre procédé bien connu de l'homme du métier. Chaque couronne 13, en référence aux figures 5 et 6, est constituée d'un anneau externe 14 portant une pluralité de dents radiales 15 en forme générale de T inversé s'étendant vers le centre de l'évidement central 16, ledit évidement central 16 permettant le passage du rotor 1 constitué du cylindre en plastoferrite aimanté 2, emmanché et collé sur l'arbre 11. Dans cet exemple particulier de réalisation, chaque couronne 13 comporte 9 dents radiales 15 ; toutefois, il est bien évident que les couronnes 13 pourront comporter un nombre impair quelconque de dents 15 sans pour autant sortir du cadre de l'invention. Ces dents radiales 15 reçoivent les bobines 4 qui sont respectivement formée autour de la tige du T de manière bien connue en soi.

Ces dents radiales 15 sont dimensionnées de telle manière que le rapport entre la surface S1 des dents 15 et la surface S2 des espaces entre lesdites dents 15 est compris entre 0.3 et 0.7, de préférence entre 0.45 et 0.55 et, plus préférentiellement égal à 0.5.

On notera que ce rapport particulier entre la surface des dents 15 et la surface des espaces entre lesdites dents 15 procure un couple particulièrement important permettant de réduire significativement le diamètre, mais surtout la longueur du moteur. Ainsi, il est possible de réaliser des moteurs électriques tubulaires deux fois moins longs, pour un même diamètre et une même puissance, que les moteurs électriques tubulaires de l'art antérieur.

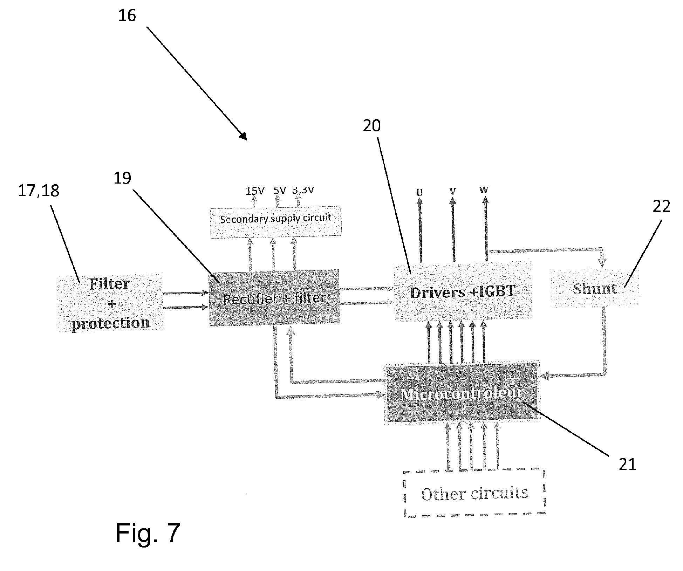

Par ailleurs, en référence à la figure 7, le moteur électrique suivant l'invention comporte une carte électronique de commande 16 du moteur comprenant au moins un filtre de compatibilité électromagnétique dit CEM 17, un circuit de correction du facteur de puissance 18, un circuit de redressement et de filtrage 19, un circuit comportant des transistors bipolaires à grille isolée 20 dits IGBT selon l'acronyme anglo-saxon « Insulated Gate Bipolar Transistor » afin de fournir la tension d'alimentation au moteur électrique et un microcontrôleur 21 apte à déterminer et transmettre les signaux de commande au circuit à transistors IGBT 20. On notera que le filtre CEM 17 consiste dans un filtre permettant d'empêcher les courants induits sur les câbles de pénétrer dans la carte électronique et de perturber les fonctions qui s'y trouve. Ce filtre CEM 17 peut par exemple consister dans un filtrage fréquentiel et/ou un filtre temporel et/ou dans un écrêtage en tension ou dans tout autre filtre bien connu de l'homme du métier afin de supprimer les perturbations électromagnétiques en mode conduites et rayonnées. Le circuit correcteur du facteur de puissance 18 permet, de manière usuelle, d'éliminer les déformations du réseau électrique sur le courant absorbé pour éviter l'apparition de courants harmoniques polluant le réseau d'une part, et de mettre le courant et la tension en phase d'autre part. Le circuit de redressement de redressement et de filtrage 19 permet d'assurer la tension du bus continu.

Ledit circuit 16 comporte par ailleurs un shunt 22 consistant dans un ensemble de résistances de faibles valeurs pour mesurer les courants dans les phases du moteur. Ces mesures du courant dans les phases du moteur sont utiles pour assurer le contrôle du moteur au moyen du microcontrôleur 21 comme il sera détaillé un peu plus loin.

Ledit microcontrôleur 21 comporte un programme à commande vectorielle qui est avantageusement basé sur un repère de référence lié au flux rotorique, ce qui permet d'améliorer les performances du moteur en régime dynamique.

De plus, on notera que le circuit de commande pourra consister dans un circuit de commande vectorielle ou dans tout autre circuit de commande bien connu de l'homme du métier tel qu'un circuit de commande classique fonctionnant suivant la méthode dites des six étapes.

Il est bien évident que les exemples que l'on vient de donner ne sont que des illustrations particulières et en aucun cas limitatif quant au domaine d'application de l'invention.

## Revendications

1. Moteur électrique tubulaire à aimants permanents comportant au moins un rotor (1) constitué d'au moins un aimant permanent s'étendant à travers un stator (3) portant une pluralité de bobines (4), ledit stator (3) étant constitué d'une pluralité de couronnes (13) assemblées, chaque couronne (13) comportant un évidement central (16) pour le passage du rotor (3) et une pluralité de dents radiales (15) en forme de T inversé s'étendant vers le centre de ladite couronne (13), lesdites dents radiales (15) recevant respectivement les bobines (4), ***caractérisé* en ce que** le rapport entre la surface (S1) des dents (15) et la surface (S2) des espaces entre lesdites dents (15) est compris entre 0.3 et 0.7.

2. Moteur électrique suivant la revendication précédente ***caractérisé* en ce que** le rapport entre la surface (S1) des dents (15) et la surface (S2) des espaces entre lesdites dents (15) est compris entre 0.45 et 0.55.

3. Moteur électrique suivant l'une quelconque des revendications 1 ou 2 ***caractérisé* en ce que** le rapport entre la surface (S1) des dents (15) et la surface (S2) des espaces entre lesdites dents (15) est égal à 0.5.

4. Moteur électrique suivant l'une quelconque des revendications 1 à 3 ***caractérisé* en ce que** le rotor (1) est constitué d'un cylindre en plastoferrite aimanté (2), emmanché et collé sur un arbre (11).

5. Moteur électrique suivant la revendication 4 ***caractérisé* en ce que** le cylindre en plastoferrite (2) présente une épaisseur comprise entre 0,1 et 0,2 fois la longueur dudit cylindre (2).

6. Moteur électrique suivant l'une quelconque des revendications 4 ou 5 ***caractérisé* en ce que** la paroi intérieure du cylindre en plastoferrite (2) est collée sur la paroi extérieure d'un corps de base cylindrique (12), coaxial et solidaire de l'arbre (11) du moteur.

7. Moteur électrique suivant l'une quelconque des revendications 4 à 6 ***caractérisé* en ce que** le cylindre en plastoferrite (2) est collé sur l'arbre (11) ou le corps de base cylindrique (12) au moyen d'une colle cyanoacrylate.

8. Moteur électrique suivant la revendication 7 ***caractérisé* en ce que** le corps de base cylindrique (12) présente des évidements longitudinaux uniformément répartis autour de son axe de rotation.

9. Moteur électrique suivant l'une quelconque des revendications 4 à 8 ***caractérisé* en ce que** la paroi externe du cylindre en plastoferrite (2) comporte une ou plusieurs rainures annulaires.

10. Moteur électrique à aimant permanent suivant l'une quelconque des revendications 4 à 9 ***caractérisé* en ce que** la paroi externe du cylindre en plastoferrite (2) comporte au moins un creux.
